# FASCICULE DE BREVET EUROPEEN

(11) **EP 3 332 147 B1**
(45) Date de publication et mention de la délivrance du brevet: **14.08.2019**
(21) Numéro de dépôt: 16750670.8
(22) Date de dépôt: 27.07.2016
(51) Int. Cl.: F16F 15/139, F16F 15/14

(54) **DISPOSITIF D'AMORTISSEMENT D'OSCILLATIONS DE TORSION**
VORRICHTUNG ZUR DÄMPFUNG VON TORSIONSSCHWINGUNGEN
DEVICE FOR DAMPING TORSIONAL OSCILLATIONS

(30) Priorité: 05.08.2015 FR 1557555
(43) Date de publication de la demande: 13.06.2018
(73) Titulaire: Valeo Embrayages, 80009 Amiens Cedex 2 (FR)
(72) Inventeur: HENNEBELLE, Michaël, 8009 AMIENS (FR); VERHOOG, Roel, 8009 AMIENS (FR); CAILLERET, Franck, 8009 AMIENS (FR); SALVADORI, David, 8009 AMIENS (FR)
(86) Numéro de dépôt international: PCT/EP2016/067963
(87) Numéro de publication internationale: WO 2017/021262

(56) Documents cités:
- DE-A1-102014 210 489
- FR-A1- 3 013 414

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque d'embrayage à friction ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage.

Pour remédier à ce problème, il est par exemple connu de la demande DE 10 2012 221 103 de prévoir des ressorts entre deux corps pendulaires voisins circonférentiellement, de manière à ce que les corps pendulaires ainsi reliés résistent à la force de gravité exercée tour à tour sur ces derniers lorsque le dispositif est animé d'un mouvement de rotation. L'insertion de ces ressorts suppose de ménager des logements additionnels dans les corps pendulaires ou de prévoir des moyens de fixation appropriés sur ces corps pendulaires, ce qui est coûteux et complexe. Du fait de l'insertion des ressorts, une fréquence de résonance additionnelle apparaît par ailleurs. L'insertion des ressorts peut encore nécessiter de ménager des découpes ouvertes dans le support du dispositif, réduisant alors le débattement des corps pendulaires. En outre, il est nécessaire de dimensionner correctement les ressorts et le maintien dans le temps des caractéristiques des ressorts n'est pas garanti.

Le document FR 3 013 414 A1 est considéré comme étant l'état de la technique le plus proche de l'objet de l'invention et divulgue les caractéristiques du préambule de la revendication indépendante 1.

L'invention a pour objet de réduire l'influence de la gravité sur les corps pendulaires, notamment lorsque ces derniers ont pour but de filtrer l'ordre d'excitation d'un moteur thermique à deux cylindres du véhicule, tout en remédiant à tout ou partie des inconvénients ci-dessus.

L'invention y parvient, selon l'un de ses aspects, à l'aide d'un dispositif d'amortissement d'oscillations de torsion, comprenant :
- au moins un support apte à se déplacer en rotation autour d'un axe,
- une pluralité de corps pendulaires, chaque corps pendulaire étant mobile par rapport au support, et
- une connexion par frottement entre deux corps pendulaires voisins circonférentiellement.

Au sens de la présente demande, deux corps pendulaires voisins circonférentiellement sont reliés par une connexion par frottement. Une connexion par frottement est différente de la connexion par ressort qui est connue de l'art antérieur précité. La connexion selon l'invention implique la présence de surfaces de frottement entre les deux corps pendulaires voisins circonférentiellement, ces surfaces de frottement coopérant de manière à ce que le déplacement de l'un de ces deux corps pendulaires soit transmis à l'autre de ces deux corps pendulaires. La connexion par frottement met notamment en oeuvre un frottement axial, c'est-à-dire que les surfaces de frottement coopérant entre elles sont en regard axialement.

Une telle connexion par frottement entre deux corps pendulaires voisins circonférentiellement permet de limiter le déplacement de ces derniers sous l'effet de la gravité et entrave donc l'action de la gravité sur les corps pendulaires. Lorsque le support tourne, chaque corps pendulaire occupe successivement la position la plus haute autour de l'axe de rotation du support. Un corps pendulaire occupant une telle position est relié via la connexion par frottement à un autre corps pendulaire qui est plus bas et donc moins soumis à l'action de la gravité. Le déplacement vers le bas du corps pendulaire le plus haut est transmis via la connexion par frottement à cet autre corps pendulaire qui s'oppose alors à ce déplacement vers le bas.

La connexion par frottement peut permettre l'apparition d'un phénomène d'hystérésis pour le déplacement des deux corps pendulaires qu'elle relie, le déplacement sous l'effet de la gravité de l'un de ces corps pendulaires étant transmis avec un certain retard à l'autre corps pendulaire.

La connexion par frottement est avantageusement dimensionnée de manière à réduire le déplacement des corps pendulaires sous l'effet de la gravité sans affecter les performances de filtrage des oscillations de torsion par le déplacement des corps pendulaires.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale », et
- « solidaire » signifie « rigidement couplé ».

Toujours au sens de la présente demande, la position de repos du dispositif est la position de ce dernier dans laquelle les corps pendulaires sont soumis à une force centrifuge, mais non à des oscillations de torsion provenant des acyclismes du moteur thermique.

Le dispositif comprend par exemple une pluralité de connexions par frottement, de manière à ce que pour chaque corps pendulaire :
- une connexion par frottement existe avec le corps pendulaire voisin circonférentiellement dans le sens trigonométrique, et
- une connexion par frottement existe avec le corps pendulaire voisin circonférentiellement dans le sens non-trigonométrique.

Tous les corps pendulaires peuvent ainsi être reliés deux à deux par une connexion par frottement.

Dans tout ce qui précède, le dispositif comprend par exemple un nombre de corps pendulaires compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Chaque connexion par frottement peut être d'un premier type, selon lequel elle est réalisée à l'aide d'au moins une patte solidaire d'un des deux corps pendulaires voisins circonférentiellement et frottant contre l'autre des deux corps pendulaires. Cette patte est par exemple réalisée d'une seule pièce avec le corps pendulaire dont elle est solidaire. En variante, cette patte est distincte des deux corps pendulaires reliés par la connexion par frottement et elle est fixée sur l'un de ces deux corps pendulaires. La patte est par exemple vissée sur l'un des deux corps pendulaires. La patte peut selon cette variante être réalisée dans un matériau adaptée au frottement sur un corps pendulaire.

La patte est avantageusement réalisée en un matériau élastiquement déformable. La patte est par exemple réalisée en matière plastique ou en acier de type ressort.

La patte peut en variante être réalisée en plusieurs matériaux distincts. La partie de la patte frottant contre un des deux corps pendulaires est par exemple réalisée dans un matériau adapté au frottement, par exemple de l'acier, tandis que la partie de la patte solidaire de l'autre des deux corps pendulaires est par exemple réalisée en un matériau adapté à la tenue de la patte sur ce corps pendulaire, par exemple en fibres de carbone.

Chaque patte peut présenter une partie de fixation sur l'un des deux corps pendulaires et une extrémité libre frottant contre l'autre des deux corps pendulaires, la partie de cette patte disposée entre la partie de fixation et l'extrémité libre de la patte est alors notamment ondulée. L'extrémité libre de la patte peut être recourbée.

Lorsque le dispositif est au repos, chaque patte peut s'étendre sensiblement circonférentiellement entre sa partie de fixation sur l'un des deux corps pendulaires et son extrémité libre frottant contre l'autre des deux corps pendulaires.

Chaque patte peut être telle que son extrémité libre soit en permanence axialement en regard du corps pendulaire dont elle n'est pas solidaire, de manière à ce que cette extrémité libre puisse frotter contre ce corps pendulaire. Autrement dit, la patte peut être dimensionnée et disposée de manière à s'étendre sur une distance telle que son extrémité libre reste en permanence en regard d'une portion du corps pendulaire contre lequel elle est destinée à frotter, quelles que soient les positions relatives des deux corps pendulaires reliées par la connexion par frottement.

La connexion par frottement peut encore être réalisée autrement, d'un deuxième type selon lequel cette connexion est effectuée autrement que via une patte solidaire d'un des deux corps pendulaires et frottant contre l'autre des deux corps pendulaires.

Selon ce deuxième type, la connexion par frottement est réalisée via une pièce s'étendant tout autour de l'axe de rotation du support et mobile par rapport au support, cette pièce frottant contre chaque corps pendulaire. Toutes les connexions par frottement du dispositif se font alors via une seule et même pièce. Selon ce deuxième type, tous les corps pendulaires du dispositif sont connectés ensemble par frottement via cette même pièce. On harmonise ainsi le mouvement de tous les corps pendulaires du dispositif.

Cette pièce est par exemple réalisée en un matériau élastiquement déformable.

En variante, la partie de cette pièce frottant sur les corps pendulaires est par exemple réalisée en un matériau adapté à ce frottement, par exemple en acier, tandis que le reste de cette pièce peut être réalisé dans un autre matériau.

La pièce permettant que des connexions par frottement soient établies entre tous les corps pendulaires circonférentiellement voisins du dispositif peut présenter une partie annulaire depuis laquelle des pattes font saillie radialement vers l'intérieur. Chaque corps pendulaire n'est par exemple associé qu'à une patte. En variante, plusieurs pattes frottent contre un même corps pendulaire.

En variante, la pièce permettant que des connexions par frottement soient établies entre tous les corps pendulaires circonférentiellement voisins du dispositif est uniquement formée par une partie annulaire, étant dépourvue de pattes faisant saillie radialement. Il s'agit par exemple d'une pièce annulaire largement évidée telle qu'une rondelle annulaire. Cette rondelle peut être une rondelle ondulée axialement parlant, une telle rondelle ondulée occupant alors successivement différentes positions axiales lorsque l'on se déplace autour de son axe.

Que la connexion par frottement soit du premier type ou du deuxième type, elle peut permettre, lorsque tous les corps pendulaires du dispositif sont reliés par de telles connexions, que l'écart entre deux corps pendulaires voisins circonférentiellement soit constant pour tous les corps pendulaires du dispositif pour des vitesses de rotation du moteur thermique du véhicule au-delà d'un certain seuil. Plus précisément, si trois corps pendulaires sont présents, l'écart entre les corps pendulaires 1 et 2 sera, pour ces vitesses, égal à celui entre les corps pendulaires 2 et 3 et égal à celui entre les corps pendulaires 3 et 1. Un tel écart constant peut par exemple être obtenu pour des valeurs de vitesse pour lesquelles les corps pendulaires ne sont pas encore amenés dans leur position la plus radialement extérieure sous l'effet de la force centrifuge, ces valeurs de vitesses correspondent par exemple à la montée en régime ou à la descente de régime.

Dans tout ce qui précède, le dispositif peut comprendre une pluralité d'organes de roulement, chaque organe de roulement coopérant avec une première piste de roulement solidaire du support et avec une deuxième piste de roulement solidaire d'un corps pendulaire, le déplacement de chaque corps pendulaire par rapport au support étant guidé par au moins deux de ces organes de roulement.

La forme des premières et deuxièmes pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Ce mouvement combiné peut être qualifié de mouvement combiné à 100%. On parle de mouvement combiné à 100% pour un corps pendulaire lorsque, dans la position de repos du dispositif, dans un plan perpendiculaire à l'axe de rotation, la normale au contact entre une première piste de roulement et l'un des organes de roulement guidant le déplacement de ce corps pendulaire, et la normale au contact entre une autre première piste de roulement et l'autre des organes de roulement guidant le déplacement de ce corps pendulaire sont sécantes sur l'axe de rotation du support.

En variante, la forme des premières et deuxièmes pistes de roulement précitées peut être telle que chaque corps pendulaire soit uniquement déplacé par rapport au support en translation autour d'un axe fictif parallèle à l'axe de rotation du support.

Le support peut comprendre une pluralité de fenêtres dans chacune desquelles deux organes de roulement sont reçus, l'un de ces organes de roulement coopérant avec une deuxième piste de roulement solidaire d'un des deux corps pendulaires voisins circonférentiellement et l'autre de ces organes de roulement coopérant avec une deuxième piste de roulement solidaire d'un autre de ces deux corps pendulaires voisins circonférentiellement. Dans ce cas, chaque connexion par frottement du premier type peut être disposée dans une fenêtre entre les deux organes de roulement présents dans cette fenêtre.

En variante, chaque fenêtre ménagée dans le support reçoit deux organes de roulement guidant le déplacement par rapport au support d'un seul corps pendulaire.

En variante encore, chaque fenêtre ménagée dans le support ne reçoit qu'un seul organe de roulement.

Dans tout ce qui précède, le dispositif peut comporter une pluralité d'organes d'amortissement de butée, chaque organe d'amortissement de butée étant disposé de manière à s'interposer entre une partie d'un corps pendulaire et une partie du support de manière à amortir les chocs entre ces derniers. Ces chocs correspondent par exemple à la venue en butée du corps pendulaire contre le support à l'issue d'un déplacement de ce corps pendulaire pour filtrer une oscillation de torsion ou à la chute radiale de ce corps pendulaire lors de l'arrêt du moteur du véhicule.

Chaque organe d'amortissement de butée est par exemple réalisé en caoutchouc ou en élastomère. L'organe d'amortissement de butée peut présenter en section transversale une forme cylindrique ou non.

Selon un premier exemple de mise en oeuvre de l'invention, le support est unique et chaque corps pendulaire comprend:
- une première et une deuxième masses pendulaires espacées axialement l'une par rapport à l'autre, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires, appariant lesdites masses.

Selon une première variante de ce premier exemple de mise en oeuvre, chaque corps pendulaire comprend deux organes de liaison appariant la première et la deuxième masse pendulaires, chaque organe de liaison définissant une deuxième piste de roulement coopérant respectivement avec l'un des deux organes de roulement guidant le déplacement de ce corps pendulaire par rapport au support. Chaque organe de roulement coopère ici avec une seule deuxième piste de roulement. Une portion du contour de cet organe de liaison, par exemple une partie de la surface radialement extérieure de cet organe de liaison ou un revêtement déposé sur cette partie de la surface radialement extérieure de cet organe de liaison, définit par exemple cette piste de roulement solidaire du corps pendulaire. Dans ce cas, une partie du contour de la fenêtre dans laquelle est disposé cet organe de liaison définit alors la piste de roulement solidaire du support avec laquelle coopère l'organe de roulement pour guider le déplacement par rapport au support de ce corps pendulaire.

Un tel organe de liaison est par exemple emmanché en force via chacune de ses extrémités axiales dans une ouverture ménagée dans une des masses pendulaires. En variante, l'organe de liaison peut être soudé via ses extrémités axiales sur chaque masse pendulaire. L'organe de liaison peut encore être vissé ou riveté sur chaque masse pendulaire.

Selon cette première variante du premier exemple de mise en oeuvre de l'invention, chaque organe de roulement peut alors être uniquement sollicité en compression entre la première piste de roulement solidaire du support et la deuxième piste de roulement solidaire du corps pendulaire telles que mentionnées ci-dessus. Ces pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon cette première variante du premier exemple de mise en oeuvre, la connexion par frottement entre deux corps pendulaires voisins circonférentiellement est par exemple du premier type et elle peut mettre en oeuvre deux pattes distinctes. Une première patte est notamment disposée du premier côté du support tandis qu'une deuxième patte est disposée du deuxième côté du support. La présence d'une patte de chaque côté du support permet d'équilibrer les frottements qui sont exercés sur le corps pendulaire, et éviter ainsi que les masses pendulaires formant ce corps pendulaire ne se mettent de biais par rapport au support. Une telle mise de biais risquerait de se passer si seule une des masses pendulaires du corps pendulaires subissait un frottement du à la connexion par frottement.

Dans un tel cas, la première patte est ainsi solidaire d'une première masse pendulaire d'un des deux corps pendulaires et frotte contre la première masse pendulaire de l'autre des deux corps pendulaires. La deuxième patte peut agir similairement entre la deuxième masse pendulaire de l'un des deux corps pendulaires et la deuxième masse pendulaire de l'autre des deux corps pendulaires.

Plus précisément, les deux pattes de la connexion du premier type entre les deux corps pendulaires peuvent toutes les deux être solidaires du même corps pendulaire et frotter contre l'autre corps pendulaire. En variante, la première patte est par exemple solidaire de la première masse pendulaire de l'un des deux corps pendulaires et elle frotte contre la première masse pendulaire de l'autre des deux corps pendulaires tandis que la deuxième patte est solidaire de la deuxième masse pendulaire du corps pendulaire contre lequel frotte la première patte et cette deuxième patte frotte contre la deuxième masse du corps pendulaire dont est solidaire la première patte. La première et la deuxième patte de chaque connexion peuvent être identiques.

Lorsque chaque fenêtre ménagée dans le support reçoit des organes de roulement guidant le déplacement par rapport au support de deux corps pendulaires différents, la connexion du premier type peut ne mettre en oeuvre qu'une unique patte, et cette dernière est reçue dans la fenêtre entre les deux organes de roulement. Cette patte est par exemple solidaire d'un organe de liaison d'un des deux corps pendulaires, et elle vient frotter contre chaque masse pendulaire de l'autre des deux corps pendulaires. La partie de fixation de cette patte présente par exemple deux extrémités axiales qui sont solidarisées à chaque masse pendulaire reliée par cet organe de liaison. L'extrémité libre de cette patte unique présente par exemple deux bras s'étendant sensiblement parallèlement et disposés entre les deux masses pendulaires de l'autre des deux corps pendulaires, de sorte que l'un des bras vient frotter contre la première masse pendulaire de l'autre des deux corps pendulaires tandis que l'autre des bras vient frotter contre la deuxième masse pendulaire de l'autre des deux corps pendulaires.

Selon cette première variante du premier exemple de mise en oeuvre de l'invention, cette connexion peut être du deuxième type. La pièce venant frotter sur les corps pendulaires se présente par exemple sous la forme de deux flasques. Chaque flasque peut être disposé d'un côté du support et porter des pattes, par exemple réalisées d'une seule pièce avec le flasque. Chaque patte vient alors s'appliquer, notamment via son extrémité libre, contre l'une des masses pendulaires d'un corps pendulaire. Chaque patte peut être en matière plastique ou en acier de type ressort.

Chaque patte peut s'étendre radialement entre le reste du flasque et son extrémité libre.

La pièce est par exemple formée par :
- un premier flasque disposé du premier côté du support et présentant une portion radialement intérieure portant des premières pattes, cette portion radialement intérieure du premier flasque s'étendant axialement au-delà des premières masses pendulaires des corps pendulaires de manière à ce que chaque première patte vienne frotter contre une première masses pendulaire, et
- un deuxième flasque disposé du deuxième côté du support et présentant une portion radialement intérieure portant des deuxièmes pattes, cette portion radialement intérieure du premier flasque s'étendant axialement au-delà des deuxièmes masses pendulaires des corps pendulaires de manière à ce que chaque deuxième patte vienne frotter contre une deuxième masse pendulaire.

Le premier et le deuxième flasque peuvent être solidarisés, par exemple par des vis ou des rivets, via leur portion radialement extérieure. Le centrage de la pièce formée par les premier et deuxième flasques est par exemple effectué sur le support. La portion radialement extérieure des deux flasques peut alors définir la partie annulaire précitée de la pièce.

Selon une deuxième variante du premier exemple de mise en oeuvre de l'invention, le support est toujours unique et chaque organe de roulement coopère avec deux deuxièmes pistes de roulement solidaires du corps pendulaire, l'une de ces deuxièmes pistes de roulement étant définie par la première masse pendulaire et l'autre de ces deuxièmes pistes de roulement étant définie par la deuxième masse pendulaire.

Selon cette deuxième variante, la connexion par frottement peut être du premier type et telle que décrite en référence à la première variante du premier exemple de mise en oeuvre de l'invention ou la connexion par frottement peut être du deuxième type et telle que décrite en référence à la première variante du premier exemple de mise en oeuvre de l'invention.

Selon cette deuxième variante, chaque organe de liaison est par exemple un rivet. Le rivet peut être reçu dans une fenêtre du support dans laquelle est déjà reçu un organe de roulement. Comme précédemment, une partie du contour de la fenêtre définit alors la première piste de roulement solidaire du support.

Chaque organe de roulement peut, selon cette deuxième variante du premier exemple de mise en oeuvre de l'invention, comprendre successivement axialement:
- une portion disposée dans une cavité de la première masse pendulaire et coopérant avec la deuxième piste de roulement formée par une partie du contour de cette cavité,
- une portion disposée dans une fenêtre du support et coopérant avec la première piste de roulement formée par une partie du contour de cette fenêtre, et
- une portion disposée dans une cavité de la deuxième masse pendulaire et coopérant avec la deuxième piste de roulement formée par une partie du contour de cette cavité.

Selon un deuxième exemple de mise en oeuvre de l'invention, le dispositif comprend deux supports distincts décalés axialement et solidaires, chaque corps pendulaire comprenant au moins une masse pendulaire disposée axialement entre les deux supports. Chaque corps pendulaire peut comprendre plusieurs masses pendulaires, par exemple deux ou trois masses pendulaires, qui peuvent ou non être solidarisées entre elles, et qui sont disposées axialement entre les deux supports.

La ou les masses pendulaires d'un corps pendulaire sont alors prises en sandwich axialement entre les deux supports. Les deux supports sont par exemple solidarisés via une liaison telle qu'un rivetage positionnée radialement intérieurement par rapport aux corps pendulaires. Deux capots peuvent alors être positionnés axialement autour de l'ensemble formé par les deux supports et les corps pendulaires. On peut ainsi trouver successivement axialement :
- l'un des capots,
- l'un des supports,
- la ou les masses pendulaires,
- l'autre des supports, et
- l'autre des capots.

Selon une première variante de ce deuxième exemple de mise en oeuvre de l'invention, chaque corps pendulaire présente une excroissance faisant saillie axialement dans une fenêtre d'un des supports, cette excroissance définissant une deuxième piste de roulement solidaire du corps pendulaire.

Deux excroissances peuvent être prévues sur chaque côté d'une masse pendulaire ou de l'ensemble solidaire de masses pendulaires solidaires et, d'un côté à l'autre de la masse pendulaire ou de cet ensemble solidaire de masses pendulaires, ces excroissances peuvent s'étendre axialement dans des directions opposées et être axialement superposées. Les deux excroissances ménagées d'un premier côté de la masse pendulaire ou de l'ensemble solidaire de masses pendulaires font alors saillie dans deux fenêtres différentes de l'un des supports tandis que les deux excroissances ménagées d'un deuxième côté opposé au premier côté de la masse pendulaire ou de l'ensemble solidaire de masses pendulaires font alors saillie dans deux fenêtres différentes de l'autre des supports.

Le déplacement d'un corps pendulaire par rapport au support peut ici être guidé par quatre organes de roulement :
- un premier organe de roulement coopérant avec une première piste de roulement définie par une partie du contour d'une des fenêtres ménagées dans le support disposé du premier côté de la masse pendulaire ou de l'ensemble solidaire de masses pendulaires et avec une deuxième piste de roulement définie par une des excroissances ménagées de ce premier côté de la masse pendulaire ou de l'ensemble solidaire de masses pendulaires,
- un deuxième organe de roulement coopérant avec une première piste de roulement définie par une partie du contour d'une autre fenêtre ménagée dans le support disposé du premier côté de la masse pendulaire ou de l'ensemble solidaire de masses pendulaires et avec une deuxième piste de roulement définie par une autre des excroissances ménagées de ce premier côté de la masse pendulaire ou de l'ensemble solidaire de masses pendulaires,
- un troisième organe de roulement coopérant avec une première piste de roulement définie par une partie du contour d'une des fenêtres ménagées dans le support disposé du deuxième côté de la masse pendulaire ou de l'ensemble solidaire de masses pendulaires et avec une deuxième piste de roulement définie par une des excroissances ménagées de ce deuxième côté de la masse pendulaire ou de l'ensemble solidaire de masses pendulaires, et
- un quatrième organe de roulement coopérant avec une première piste de roulement définie par une partie du contour d'une autre fenêtre ménagée dans le support disposé du deuxième côté de la masse pendulaire ou de l'ensemble solidaire de masses pendulaires et avec une deuxième piste de roulement définie par une autre des excroissances ménagées de ce deuxième côté de la masse pendulaire ou de l'ensemble solidaire de masses pendulaires,

Chacun de ces quatre organes de roulement peut être uniquement sollicité en compression, comme expliqué en référence avec le premier exemple de mise en oeuvre de l'invention.

Selon cette première variante, la connexion par frottement entre les corps pendulaires peut être du premier type ou du deuxième type. Lorsque la connexion est du deuxième type, la pièce frottant contre chaque corps pendulaire peut être une rondelle annulaire dont la dimension radialement extérieure est de préférence inférieure à celle des corps pendulaires. Un logement peut être ménagé dans la masse pendulaire unique ou dans l'ensemble solidaire de masses pendulaires, de sorte que la rondelle est axialement disposée à l'intérieur de la masse pendulaire unique ou de l'ensemble solidaire de masses pendulaires. La rondelle peut ainsi frotter contre l'un des bords axiaux du logement dans lequel elle est reçue.

Lorsque la rondelle est ondulée axialement, elle peut venir frotter successivement contre chaque bord axial du logement ménagé dans la masse pendulaire unique ou dans l'ensemble solidaire de masses pendulaires.

Selon cette première variante, chaque masse pendulaire ou chaque ensemble solidaire de masses pendulaires n'est alors pas traversée par un organe de roulement.

Selon une deuxième variante de ce deuxième exemple de mise en oeuvre de l'invention, la masse pendulaire ou chaque masse de l'ensemble solidaire de masses pendulaires présente au moins deux cavités traversantes, de manière à ce que chaque organe de roulement soit reçu :
- dans une fenêtre ménagée dans l'un des deux supports,
- dans une cavité ménagée dans la masse pendulaire ou dans chacune des masses de l'ensemble solidaire de masses pendulaires, et
- dans une fenêtre ménagée dans l'autre des deux supports.

Selon cette deuxième variante, chaque connexion par frottement peut être du premier type ou du deuxième type. Lorsque la connexion par frottement est du deuxième type, la pièce frottant contre chaque corps pendulaire peut être une rondelle annulaire, par exemple une rondelle annulaire ondulée, comme mentionné précédemment.

Dans tout ce qui précède, la surface du corps pendulaire impliquée dans la connexion par frottement, par exemple celle contre laquelle frotte une patte lorsqu'une telle patte existe dans la connexion par frottement, peut être munie d'une piste favorisant le frottement. Cette piste peut être formée par une pastille, notamment en acier, rapportée sur cette surface ou par modification de la forme de cette surface, par exemple par creusement de cette surface.

Dans tout ce qui précède, le dispositif d'amortissement d'oscillations de torsion peut être configuré de manière à ce que le déplacement des corps pendulaires permette de filtrer l'ordre d'excitation du moteur thermique du véhicule auquel le dispositif est intégré, ce moteur thermique ayant notamment deux cylindres ou trois cylindres.

Dans tout ce qui précède, chaque support peut être réalisé d'une seule pièce, étant par exemple entièrement métallique.

Dans tout ce qui précède, le dispositif peut comprendre au moins une pièce d'interposition dont au moins une partie est axialement disposée entre un support et une masse pendulaire du corps pendulaire. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

L'invention a encore pour objet, selon un autre de ses aspects, un composant pour système de transmission d'un véhicule automobile, le composant étant notamment un double volant amortisseur, un convertisseur de couple hydrodynamique, un disque d'embrayage à friction, un volant solidaire de vilebrequin, un double embrayage à sec ou humide, un embrayage simple humide, ou encore un composant d'un groupe motopropulseur hybride, comprenant un dispositif d'amortissement tel que défini précédemment.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, un groupe motopropulseur de véhicule comprenant :
- un moteur thermique de propulsion du véhicule, notamment à deux, trois ou quatre cylindres, et
- un composant pour système de transmission tél que défini ci-dessus.

Le cas échéant, un système de désactivation de cylindres peut permettre de ne faire fonctionner le moteur thermique qu'avec certains seulement de ces cylindres actifs. Le moteur peut ainsi présenter un mode de fonctionnement dans lequel seulement deux de ses cylindres sont actifs et les corps pendulaires peuvent alors viser à filtrer l'ordre d'excitation de ce moteur dans ce mode de fonctionnement.

L'invention pourra être mieux comprise à la lecture de la description qui va suivre d'exemples non limitatifs de mise en oeuvre de celle-ci et à l'examen du dessin annexé sur lequel :
- la figure 1 représente un dispositif d'amortissement d'oscillations de torsion selon une première variante d'un premier exemple de mise en oeuvre de l'invention,
- la figure 2 représente un détail du dispositif de la figure 1,
- la figure 3 représente une alternative à ce qui est représenté sur la figure 2,
- les figures 4 et 5 représentent une autre alternative à ce qui est représenté sur la figure 2, la figure 5 étant une vue en coupe selon V-V de la figure 4,
- la figure 6 représente, similairement à la figure 4, un dispositif d'amortissement d'oscillations de torsion selon une deuxième variante du premier exemple de mise en oeuvre de l'invention,
- les figure 7 à 9 représentent un dispositif d'amortissement d'oscillations de torsion selon une première variante d'un deuxième exemple de mise en oeuvre de l'invention, la figure 8 étant une vue en coupe selon VIII-VIII de la figure 7, et la figure 9 différant de la figure 7 par le fait qu'un des supports n'y est pas représenté et par le fait que les corps pendulaires n'y sont pas représentés en totalité, et
- les figures 10 et 11 représentent un dispositif d'amortissement d'oscillations de torsion selon une deuxième variante d'un deuxième exemple de mise en oeuvre de l'invention, la figure 11 différant de la figure 10 par le fait qu'un des supports n'y est pas représenté et par le fait que les corps pendulaires n'y sont pas représentés en totalité.

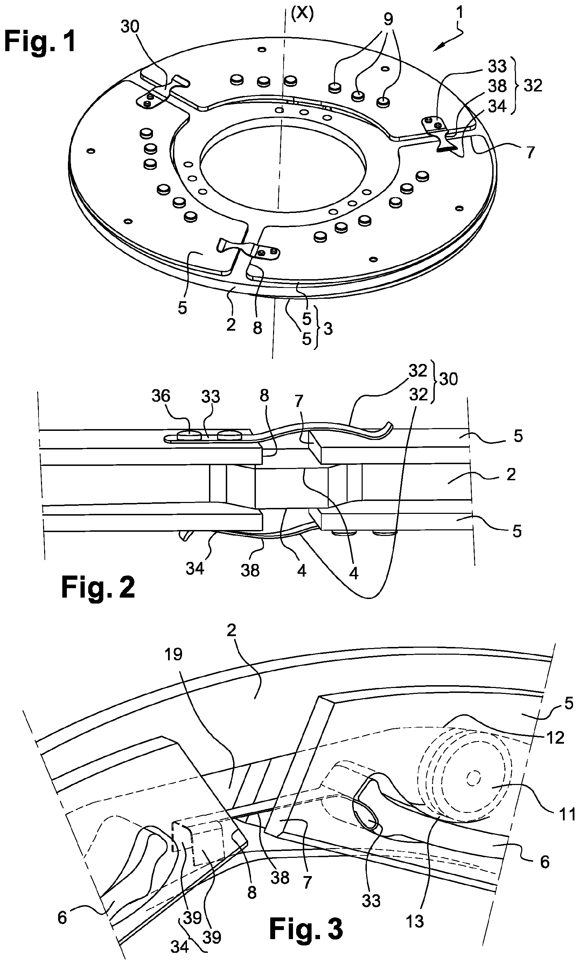

On a représenté sur la figure 1 un dispositif d'amortissement 1 d'oscillations de torsion selon une première variante d'un premier exemple de mise en oeuvre de l'invention.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque d'embrayage.

Ce composant peut faire partie d'un groupe motopropulseur d'un véhicule automobile, ce groupe comprenant un moteur thermique notamment à deux, trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Selon le premier exemple de mise en oeuvre de l'invention, qui va être décrit en référence aux figures 1 à 6, le support 2 est unique. On observe par ailleurs sur les figures 1 à 6 que trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur,
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Dans l'exemple considéré, le support 2 présente globalement une forme d'anneau comportant deux côtés opposés 4 qui sont ici des faces planes.

Comme on peut notamment le voir sur les figures 1 à 5, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

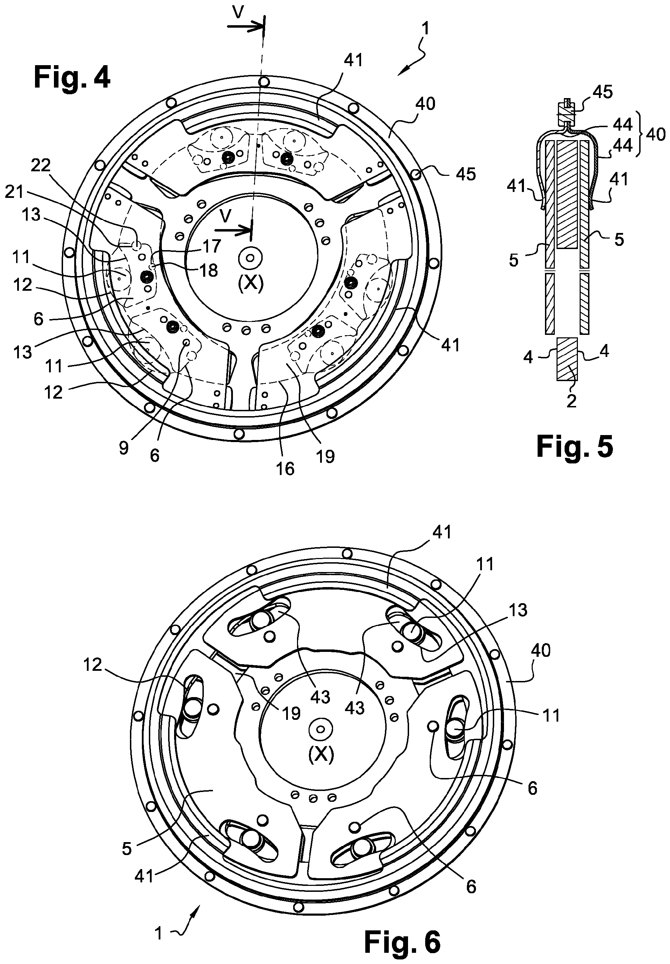

Les organes de liaison 6, encore appelés « entretoises », sont mieux visibles sur les figures 3 et 4, et ils sont dans les exemples considérés décalés angulairement. Chaque corps 3 s'étend angulairement entre deux extrémités circonférentielles, qui correspondent respectivement aux extrémités circonférentielles 7 et 8 des masses pendulaires 5 de ce corps.

Dans l'exemple des figures 1 et 2 ainsi que dans l'exemple des figures 4 et 5, chaque organe de liaison 6 est vissé sur une des masses pendulaires 5 via des vis 9 visibles sur la figure 1 de manière à solidariser ces dernières entre elles. Dans l'alternative représentée à la figure 3, chaque extrémité d'un organe de liaison 6 est emmanchée en force dans une ouverture ménagée dans une des masses pendulaires 5 du corps pendulaire 3, de manière à solidariser entre elles ces deux masses pendulaires 5.

Dans encore une autre alternative, chaque extrémité d'un organe de liaison 6 est solidarisée à une des masses pendulaires 5 par soudure.

Dans encore une autre alternative, chaque organe de liaison est riveté à une des masses pendulaires 5.

Le dispositif 1 comprend encore des organes de roulement 11 visibles sur les figures 3 et 4 par exemple, guidant le déplacement des corps pendulaires 3 par rapport au support 2. Les organes de roulement 11 sont ici des rouleaux.

Dans l'exemple décrit, le mouvement par rapport au support 2 de chaque corps pendulaire 3 est guidé par deux organes de roulement 11. Ce mouvement est par exemple un mouvement combiné.

Chaque organe de roulement 11 est reçu dans une fenêtre 19 ménagée dans le support 2. Dans l'exemple des figures 1 et 2 ainsi que dans l'exemple des figures 4 et 5, une même fenêtre 19 ménagée dans le support 2 reçoit les deux organes de roulement 11 guidant le déplacement d'un corps pendulaire 3 par rapport au support 2.

Chaque fenêtre 19 présente un contour fermé 16 et une partie de ce contour 16 définit une première piste de roulement 12 solidaire du support 2, sur laquelle l'un des organes de roulement 11 reçus dans cette fenêtre 19 va rouler, tandis qu'une autre partie de ce contour fermé 16 définit une autre première piste de roulement 12 solidaire du support 2, sur laquelle l'autre organe de roulement 11 reçu dans la fenêtre 19 va rouler.

Dans l'exemple de la figure 3, une même fenêtre ménagée dans le support 2 reçoit un organe de roulement 11 guidant le déplacement d'un corps pendulaire 3 par rapport au support ainsi qu'un organe de roulement 11 guidant le déplacement d'un corps pendulaire circonférentiellement voisin par rapport au support 2. Chaque fenêtre 19 présente un contour fermé 16, ce contour fermé présentant une partie définissant première piste de roulement 12 solidaire du support 2, sur laquelle l'un des organes de roulement 11 reçus dans cette fenêtre 19 va rouler, tandis qu'une autre partie de ce contour fermé 16 définit une autre première piste de roulement 12 solidaire du support 2, sur laquelle l'autre organe de roulement 11 reçu dans la fenêtre 19 va rouler.

Dans l'exemple des figures 1 à 5, chaque fenêtre 19 reçoit par ailleurs deux organes de liaison 6 du corps pendulaire 3.

Chaque organe de liaison 6 définit dans l'exemple des figures 1 à 5 une deuxième piste de roulement 13 qui est solidaire du corps pendulaire 3 auquel cet organe de liaison 6 appartient et sur laquelle roule un des organes de roulement 11 pour guider le déplacement de ce corps pendulaire 3 par rapport au support 2.

Chaque organe de liaison 6 présente dans l'exemple des figures 1 et 2 et dans l'exemple des figures 4 et 5 sur son bord radialement intérieur une encoche 17 dans laquelle un organe d'amortissement de butée 18 est reçu et sur son bord latéral 20 non en regard de l'autre organe de liaison 6 reçu dans cette fenêtre 19 une encoche 21 dans laquelle un autre organe d'amortissement de butée 22 est reçu. Les organes d'amortissement de butée 18 et 22 sont par exemple réalisés en élastomère ou en caoutchouc. Ces organes d'amortissement de butée 18 et 22 amortissent les chocs entre le corps pendulaire 3 et le support en cas de chute radiale lors d'un arrêt du moteur du véhicule et/ou à l'issue d'un débattement de ce corps pendulaire 3 pour filtrer une oscillation de torsion.

Selon l'invention, deux corps pendulaires 3 voisins circonférentiellement sont reliés par une connexion par frottement 30. Plus précisément, dans les exemples décrits, le dispositif 1 comprend une pluralité de connexions par frottement 30, de manière à ce que pour chaque corps pendulaire 3:
- une connexion par frottement 30 existe avec le corps pendulaire 3 voisin circonférentiellement dans le sens trigonométrique, et
- une connexion par frottement 30 existe avec le corps pendulaire 3 voisin circonférentiellement dans le sens non-trigonométrique.

Sur les figures 1 et 2, qui correspondent à une première variante d'un premier exemple de mise en oeuvre de l'invention, cette connexion est d'un premier type.

Dans l'exemple des figures 1 et 2, chaque connexion par frottement 30 met en oeuvre deux pattes 32. Comme on peut le voir plus précisément sur la figure 2, chaque patte 32 peut présenter une partie de fixation 33 sur l'un des corps pendulaires 3 et une extrémité libre 34 frottant contre l'autre des deux corps pendulaires 3. La fixation d'une patte 32 sur un des corps pendulaires 3 s'effectue dans l'exemple représenté via des vis 36. Dans l'exemple des figures 1 et 2, chaque extrémité libre 34 est recourbée et la partie 38 d'une patte disposée entre la partie de fixation 33 et l'extrémité libre 34 est ondulée. Comme on peut notamment le voir sur la figure 1, lorsque le dispositif 1 est au repos, chaque patte 32 s'étend sensiblement circonférentiellement entre sa partie de fixation 33 et son extrémité libre 34. Toujours dans l'exemple considéré, chaque patte 32 est telle que son extrémité libre 34 soit en permanence axialement en regard du corps pendulaire 3 contre lequel elle doit frotter.

Dans l'exemple des figures 1 et 2, une première patte 32 est disposée du premier côté du support et elle est solidaire de la première masse pendulaire 5 d'un des corps pendulaires 3 et frotte contre la première masse pendulaire 5 de l'autre corps pendulaire 3 tandis qu'une deuxième patte 32 est disposée du deuxième côté 4 du support 2 et cette deuxième patte 32 est solidaire de la deuxième masse pendulaire 5 du corps pendulaire contre lequel frotte la première patte 32, et cette deuxième patte 32 frotte contre la deuxième masse pendulaire 5 du corps pendulaire 3 dont est solidaire la première patte 32. Au sein d'une même connexion par frottement, les pattes 32 peuvent ainsi être montées de façon inversée.

Au sein d'une même connexion par frottement 30, les première et deuxième pattes 32 peuvent être identiques et réalisées en plastique ou en acier de type ressort.

La figure 3 représente une variante de connexion par frottement 30 du premier type. Selon cette variante, la connexion par frottement 30 met en oeuvre une unique patte 32 et cette patte s'étend dans la fenêtre 19 ménagée dans le support 2 et qui reçoit des organes de roulement 11 guidant le déplacement de deux corps pendulaires circonférentiellement voisins. La partie de fixation 33 est ici emmanchée en force dans une ouverture ménagée dans chaque masse pendulaire 5 et la partie 38 s'étend dans la fenêtre 19 entre les deux corps pendulaires 3. L'extrémité libre 34 présente ici deux bras 39 s'étendant sensiblement parallèlement, ces deux bras 39 étant tous deux disposés dans l'espace axial délimité par les deux masses pendulaires 5 du corps pendulaire 3 contre lequel frotte la patte unique 32. Ces deux bras 39 sont tels que chacun d'entre eux vient frotter contre une des masses pendulaires 5.

On va maintenant décrire en référence aux figures 4 et 5 un exemple de deuxième type de connexion par frottement 30. Selon le deuxième type, tel que décrit en référence aux figures 4 et 5, toutes les connexions par frottement entre les corps pendulaires 3 du dispositif mettent en oeuvre une pièce 40 s'étendant tout autour de l'axe de rotation X du support 2 et mobile par rapport au support 2. Cette pièce 40 vient frotter contre chaque corps pendulaire 3. La pièce 40 définit des pattes 41 qui seront décrites ultérieurement, chaque patte faisant saillie radialement vers l'intérieur.

Comme on peut notamment le voir sur la figure 5, sur laquelle les organes de liaison 6 et les organes de roulement 11 ne sont pas représentés, la pièce 40 peut se présenter sous la forme de deux flasques 44 rigidement connectés entre eux via des rivets 45 au niveau de leur portion radialement extérieure.

Comme on peut le voir sur la figure 5, un premier flasque 44 est disposé d'un premier côté 4 du support 2 et s'étend axialement au-delà de la première masse pendulaire 5 de manière à ce que une ou plusieurs des premières pattes 41 qu'il porte vienne frotter contre cette première masse pendulaire 5. Similairement, un deuxième flasque 44 est disposé d'un deuxième côté 4 du support 2 et il s'étend axialement au-delà de la deuxième masse pendulaire 5 de manière à ce qu'une ou plusieurs deuxièmes pattes 41 qu'il porte vienne frotter contre cette deuxième masse pendulaire 5.

On va maintenant décrire en référence à la figure 6 une deuxième variante du premier exemple de mise en oeuvre de l'invention. Selon cette deuxième variante, chaque organe de roulement 11 coopère avec deux deuxièmes pistes de roulement 13 distinctes et solidaires d'un corps pendulaire 3.

L'une des deuxièmes pistes de roulement 13 est définie par la première masse pendulaire 5 du corps pendulaire 3 et l'autre de ces deuxièmes pistes de roulement 13 est définie par la deuxième masse pendulaire 5 de ce corps pendulaire 3. Chaque masse pendulaire 5 présente dans cet exemple deux cavités 43, et chacune de ces cavités 43 reçoit une partie d'un organe de roulement 11 qui coopère avec la deuxième piste de roulement 13 formée par une partie du contour de cette cavité 40. La première piste de roulement 12 avec laquelle coopère cet organe de roulement 11 est, comme précédemment, formée par une partie du contour 16 de la fenêtre 19.

Dans l'exemple de la figure 6, chaque organe de liaison 6 est un rivet qui est également reçu dans la fenêtre 19.

Selon la deuxième variante du premier exemple de mise en oeuvre de l'invention qui est décrite en référence à la figure 6, la connexion par frottement 30 entre deux corps pendulaires voisins circonférentiellement est du deuxième type décrit ci-dessus, mettant en oeuvre similairement à ce qui a été décrit en référence aux figures 4 et 5 une pièce 40 présentant deux flasques 44 portant respectivement des premières pattes 41 frottant contre les premières masses pendulaires 5 et des deuxièmes pattes 41 frottant contre les deuxièmes masses pendulaires 5. Chaque première patte 41 et chaque deuxième patte 41 s'étend sur un secteur angulaire donné.

Les figures 1 à 6 se rapportent au premier exemple de mise en oeuvre de l'invention, selon lequel le dispositif 1 comprend un unique support et chaque corps pendulaire 3 comprend deux masses pendulaires appariées et s'étendant chacun d'un côté 4 du support 2.

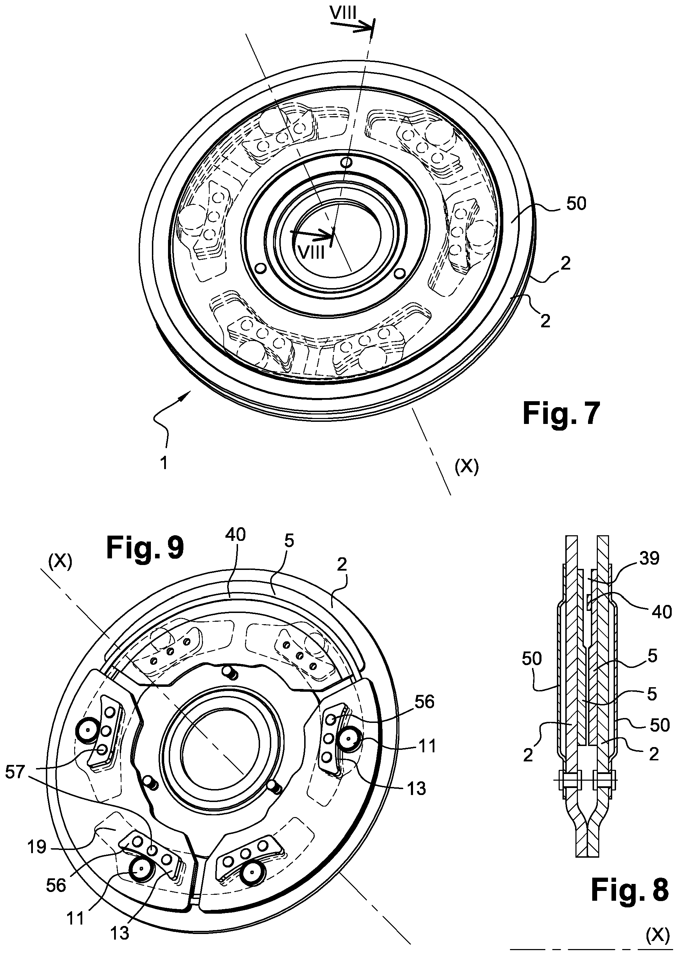

On va maintenant décrire en référence aux figures 7 à 11 deux variantes d'un dispositif d'amortissement d'oscillations de torsion selon un deuxième exemple de mise en oeuvre de l'invention.

Selon ce deuxième exemple de mise en oeuvre de l'invention, le dispositif comprend deux supports 2 distincts décalés axialement et solidaires. Chaque corps pendulaire 3 peut comprendre selon ce deuxième exemple de mise en oeuvre de l'invention une unique masse pendulaire 5 disposée axialement entre les deux supports 2. Dans ce qui va être décrit, chaque corps pendulaire 3 comprend deux masses pendulaires 5 solidarisées entre elles et qui, comme on peut le voir sur la figure 8, ont des formes permettant qu'un logement 39 soit ménagé entre les parties radialement extérieures de ces deux masses pendulaires 5. Les deux masses pendulaires 5 solidaires sont disposées axialement entre les deux supports 2. Sur la figure 9, seule une des deux masses pendulaires 5 d'un corps pendulaire 3 est représentée.

Dans l'exemple des figures 7 à 9, deux capots 50 sont positionnés axialement autour de l'ensemble formé par les deux supports 2 et les corps pendulaires 3, de sorte que l'on trouve successivement axialement :
- l'un des capots 50,
- l'un des supports 2,
- les deux masses pendulaires 5,
- l'autre des supports 2, et
- l'autre des capots 50.

Selon une première variante de ce deuxième exemple de mise en oeuvre de l'invention, qui est représentée sur les figures 7 à 9, chaque corps pendulaire 3 présentant une excroissance 56 faisant saillie axialement dans une fenêtre 19 d'un des supports 2. Cette excroissance 56, qui peut ou non être réalisée d'une seule pièce avec une des deux masses pendulaires 5 du corps pendulaire 3, définit ici une deuxième piste de roulement 13 solidaire du corps pendulaire.

Dans l'exemple représenté sur les figures 7 à 9, deux excroissances 56 sont prévues sur chaque côté des deux la masses pendulaires 5. D'un côté à l'autre des deux masses pendulaires 5, ces excroissances peuvent s'étendre axialement dans des directions opposées et être axialement superposées. Deux excroissances 56 axialement superposées peuvent être reliées ensemble et aux deux masses pendulaires 5 via des rivets 57, comme représenté sur les figures 7 et 9.

Comme on le devine sur la figure 8, les deux excroissances 56 ménagées d'un premier côté des deux masses pendulaires 5 font alors saillie dans deux fenêtres 19 différentes de l'un des supports 2 tandis que les deux excroissances 56 ménagées d'un deuxième côté des deux masses pendulaires 5, opposé au premier côté, font alors saillie dans deux fenêtres 19 différentes de l'autre des deux supports 2 du dispositif 1.

Dans l'exemple considéré, le déplacement de chaque corps pendulaire 3 par rapport au support 2 est guidé par quatre organes de roulement 11 distincts:
- un premier organe de roulement 11 coopérant avec une première piste de roulement 12 définie par une partie du contour d'une des fenêtres 19 ménagées dans le support 2 disposé du premier côté des deux masses pendulaires 5 et avec une deuxième piste de roulement 13 définie par une des excroissances 56 ménagées de ce premier côté des deux masses pendulaires 5,
- un deuxième organe de roulement 11 coopérant avec une première piste de roulement 12 définie par une partie du contour d'une autre fenêtre 19 ménagée dans le support 2 disposé du premier côté des deux masses pendulaires 5 et avec une deuxième piste de roulement 13 définie par une autre des excroissances 56 ménagées de ce premier côté des deux masses pendulaires 5,
- un troisième organe de roulement 11 coopérant avec une première piste de roulement 12 définie par une partie du contour d'une des fenêtres 19 ménagées dans le support 2 disposé du deuxième côté des deux masses pendulaires 5 et avec une deuxième piste de roulement 13 définie par une des excroissances 56 ménagées de ce deuxième côté des deux masses pendulaires 5, et
- un quatrième organe de roulement 11 coopérant avec une première piste de roulement 12 définie par une partie du contour d'une autre fenêtre 19 ménagée dans le support 2 disposé du deuxième côté des deux masses pendulaires 5 et avec une deuxième piste de roulement 13 définie par une autre des excroissances 56 ménagées de ce deuxième côté des deux masses pendulaires 5.

Dans l'exemple des figures 7 à 9, chaque corps pendulaire 3 est relié aux deux corps pendulaires 3 entre lesquels il est circonférentiellement disposé au moyen d'une connexion du deuxième type, cette dernière faisant intervenir une pièce 40 qui diffère à celles décrites en référence aux figures 4 à 6 par le fait que cette pièce 40 est une rondelle annulaire La pièce 40 est ici dépourvue de pattes et elle s'étend tout autour de l'axe de rotation X du support, de manière à pouvoir frotter contre chaque corps pendulaire 3 du dispositif 1. La rondelle est reçue dans le logement 39 et définit une succession de portions. La rondelle 40 est ici une rondelle ondulée, par exemple de type Onduflex®, et elle occupe ainsi différentes positions axiales successives dans le logement 39.

Deux portions successives de cette rondelle 40 reçues dans le logement 39 peuvent ainsi frotter contre deux bords axiaux différents de ce logement 39, c'est-à-dire contre deux masses pendulaires 5 différentes du corps pendulaire 3.

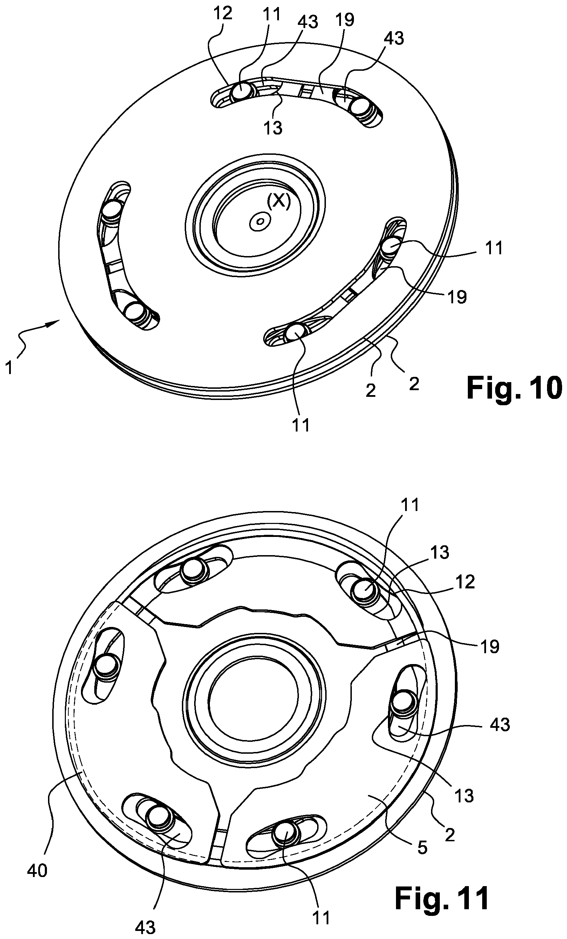

Les figures 10 et 11 représentent une deuxième variante de ce deuxième exemple de mise en oeuvre de l'invention.

Selon cette deuxième variante, chaque masse pendulaire 5 présente au moins deux cavités traversantes 43, de manière à ce que chaque organe de roulement 11 soit reçu :
- dans une fenêtre 19 ménagée dans l'un des deux supports 2,
- dans une cavité 43 ménagée dans la masse pendulaire 5, et
- dans une fenêtre 19 ménagée dans l'autre des deux supports 2.

Selon cette deuxième variante telle que décrite en référence aux figures 10 et 11, la connexion par frottement 30 entre deux corps pendulaires 3 voisins circonférentiellement est encore du deuxième type et la pièce 40 est une rondelle venant frotter contre chaque corps pendulaire 3 du dispositif, similairement à ce qui a été décrit en ce qui concerne la première variante de ce deuxième exemple de mise en oeuvre de l'invention.

L'invention n'est pas limitée aux exemples qui viennent d'être décrits.

On peut par exemple combiner entre elles des caractéristiques décrites en référence à des modes de réalisation différents.

A titre d'exemples, une connexion par frottement 30 du premier type peut être utilisée dans les exemples décrits en référence aux figures 6 à 11.

Les figures de la présente demande sont des vues à l'échelle, de sorte que des mesures peuvent être obtenues de ces dernières par l'homme du métier.

## Revendications

1. Dispositif d'amortissement d'oscillations de torsion (1), comprenant :
- au moins un support (2) apte à se déplacer en rotation autour d'un axe (X),
- une pluralité de corps pendulaires (3), chaque corps pendulaire (3) étant mobile par rapport au support (2), et
- une connexion par frottement (30) entre deux corps pendulaires (3) voisins circonférentiellement, **caractérisé en ce que** la connexion par frottement (30) mettant en oeuvre un frottement entre des surfaces de frottement en regard axialement.

2. Dispositif selon la revendication 1, comprenant une pluralité de connexions par frottement (30), de manière à ce que pour chaque corps pendulaire (3):
- une connexion par frottement (30) existe avec le corps pendulaire voisin circonférentiellement dans le sens trigonométrique, et
- une connexion par frottement (30) existe avec le corps pendulaire voisin circonférentiellement dans le sens non-trigonométrique.

3. Dispositif selon la revendication 2, la connexion par frottement (30) étant réalisée à l'aide d'au moins une patte (32) solidaire d'un des deux corps pendulaires (3) voisins circonférentiellement et frottant contre l'autre de ces deux corps pendulaires (3).

4. Dispositif selon la revendication 3, la patte (32) présentant une partie de fixation (33) sur l'un des deux corps pendulaires (3) et une extrémité libre (34) frottant contre l'autre des deux corps pendulaires (3), la partie (38) de cette patte (32) disposée entre la partie de fixation (33) et l'extrémité libre (34) de la patte (32) étant notamment ondulée.

5. Dispositif selon la revendication 4, la patte (32) étant telle que son extrémité libre (34) soit en permanence axialement en regard du corps pendulaire (3) dont elle n'est pas solidaire, de manière à ce que cette extrémité libre (34) puisse frotter contre ce corps pendulaire (3).

6. Dispositif selon la revendication 1 ou 2, la connexion par frottement (30) étant réalisée via une pièce (40) s'étendant tout autour de l'axe de rotation (X) du support (2) et mobile par rapport au support (2), cette pièce (40) frottant contre chaque corps pendulaire (3).

7. Dispositif selon l'une quelconque des revendications précédentes, comprenant une pluralité d'organes de roulement (11), chaque organe de roulement (11) coopérant avec une première piste de roulement (12) solidaire du support (2) et avec une deuxième piste de roulement solidaire (13) d'un corps pendulaire (3), le déplacement de chaque corps pendulaire (3) par rapport au support (2) étant guidé par au moins deux de ces organes de roulement (11).

8. Dispositif selon la revendication 7, le support (2) comprenant une pluralité de fenêtres (19) dans chacune desquelles deux organes de roulement (11) sont reçus, l'un de ces organes de roulement (11) coopérant avec une deuxième piste de roulement (13) solidaire d'un des deux corps pendulaires (3) voisins circonférentiellement et l'autre de ces organes de roulement (11) coopérant avec une deuxième piste de roulement (13) solidaire d'un autre de ces deux corps pendulaires (3) voisins circonférentiellement,
chaque connexion par frottement (30) étant disposée dans une fenêtre (19) entre les deux organes de roulement (11) présents dans cette fenêtre (19).

9. Dispositif selon l'une quelconque des revendications 1 à 8, le support (2) étant unique et chaque corps pendulaire (3) comprenant :
- une première et une deuxième masses pendulaires (5) espacées axialement l'une par rapport à l'autre, la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5), appariant lesdites masses.

10. Dispositif selon la revendication 9, chaque corps pendulaire (3) comprenant deux organes de liaison (6) appariant la première (5) et la deuxième (5) masse pendulaires, chaque organe de liaison (6) définissant une deuxième piste de roulement (13) coopérant respectivement avec l'un des deux organes de roulement (11) guidant le déplacement de ce corps pendulaire (3) par rapport au support (2).

11. Dispositif selon la revendication 9, chaque organe de roulement (11) coopérant avec deux deuxièmes pistes de roulement (13) solidaires du corps pendulaire (3), l'une de ces deuxièmes pistes de roulement (13) étant définie par la première masse pendulaire (5) et l'autre de ces deuxièmes pistes de roulement (13) étant définie par la deuxième masse pendulaire (5).

12. Dispositif selon la revendication 10 ou 11, chaque connexion par frottement (30) étant selon l'une quelconque des revendications 3 à 5 et comprenant :
- une première patte (32) disposée du premier côté (4) du support, la première patte (32) étant solidaire d'une première masse pendulaire (5) d'un des deux corps pendulaires (3) et frottant contre la première masse pendulaire (5) de l'autre des deux corps pendulaires (3), et
- une deuxième patte (32) disposée du deuxième côté (4) du support (2), la deuxième patte (32) étant solidaire d'une deuxième masse pendulaire (5) d'un des corps pendulaires (5) et frottant contre la deuxième masse pendulaire (5) de l'autre des deux corps pendulaires (3).

13. Dispositif selon l'une quelconque des revendications 1 à 8, comprenant deux supports (2) distincts décalés axialement et solidaires, chaque corps pendulaire (3) comprenant au moins une masse pendulaire (5) disposée axialement entre les deux supports (2).

14. Dispositif selon l'une quelconque des revendications précédentes, étant configuré de manière à ce que le déplacement des corps pendulaires (3) permette de filtrer l'ordre d'excitation d'un moteur thermique de véhicule à deux cylindres.

15. Composant pour système de transmission d'un véhicule automobile, comprenant un dispositif d'amortissement d'oscillations de torsion (1) selon l'une quelconque des revendications 1 à 14, le composant étant notamment un double volant amortisseur, un convertisseur de couple hydrodynamique, un disque d'embrayage à friction, un volant solidaire de vilebrequin, un double embrayage à sec ou humide, un embrayage simple humide, ou un composant d'un groupe motopropulseur hybride.

## Patentansprüche

1. Vorrichtung zur Dämpfung von Torsionsschwingungen (1), umfassend:
- mindestens einen Träger (2), der geeignet ist, sich um eine Achse (X) drehend zu bewegen,
- eine Vielzahl von Pendelkörpern (3), wobei jeder Pendelkörper (3) in Bezug auf den Träger (2) beweglich ist, und
- eine Reibschlussverbindung (30) zwischen zwei umfänglich benachbarten Pendelkörpern (3), **dadurch gekennzeichnet, dass** die Reibschlussverbindung (30) eine Reibung zwischen axial gegenüberliegenden Reibflächen einsetzt.

2. Vorrichtung nach Anspruch 1, umfassend eine Vielzahl von Reibschlussverbindungen (30), so dass für jeden Pendelkörper (3):
- eine Reibschlussverbindung (30) mit dem im trigonometrischen Sinne umfänglich benachbarten Pendelkörper vorliegt und
- eine Reibschlussverbindung (30) mit dem im nichttrigonometrischen Sinne umfänglich benachbarten Pendelkörper vorliegt.

3. Vorrichtung nach Anspruch 2, wobei die Reibschlussverbindung (30) mithilfe mindestens einer Lasche (32) ausgeführt wird, die fest mit einem der beiden umfänglich benachbarten Pendelkörper (3) verbunden ist und gegen den anderen dieser beiden Pendelkörper (3) reibt.

4. Vorrichtung nach Anspruch 3, wobei die Lasche (32) einen Teil zur Befestigung (33) an einem der beiden Pendelkörper (3) und ein freies Ende (34), das gegen den anderen der beiden Pendelkörper (3) reibt, aufweist, wobei der zwischen dem Befestigungsteil (33) und dem freien Ende (34) der Lasche (32) angeordnete Teil (38) dieser Lasche (32) insbesondere gewellt ist.

5. Vorrichtung nach Anspruch 4, wobei die Lasche (32) dergestalt ist, dass ihr freies Ende (34) ständig axial gegenüber dem Pendelkörper (3) liegt, mit dem sie nicht fest verbunden ist, so dass dieses freie Ende (34) gegen diesen Pendelkörper (3) reiben kann.

6. Vorrichtung nach Anspruch 1 oder 2, wobei die Reibschlussverbindung (30) über ein Teil (40) ausgeführt wird, das sich um die gesamte Drehachse (X) des Trägers (2) herum erstreckt und in Bezug auf den Träger (2) beweglich ist, wobei dieses Teil (40) gegen jeden Pendelkörper (3) reibt.

7. Vorrichtung nach einem der vorhergehenden Ansprüche, umfassend eine Vielzahl von Wälzkörpern (11), wobei jeder Wälzkörper (11) mit einer ersten Wälzbahn (12), die fest mit dem Träger (2) verbunden ist, und mit einer zweiten Wälzbahn (13), die fest mit einem Pendelkörper (3) verbunden ist, zusammenwirkt, wobei die Bewegung jedes Pendelkörpers (3) in Bezug auf den Träger (2) durch mindestens zwei dieser Wälzkörper (11) geführt wird.

8. Vorrichtung nach Anspruch 7, wobei der Träger (2) eine Vielzahl von Fenstern (19) umfasst, in denen jeweils zwei Wälzkörper (11) aufgenommen sind, wobei der eine dieser Wälzkörper (11) mit einer zweiten Wälzbahn (13) zusammenwirkt, die fest mit einem der beiden umfänglich benachbarten Pendelkörper (3) verbunden ist, und der andere dieser Wälzkörper (11) mit einer zweiten Wälzbahn (13) zusammenwirkt, die mit einem anderen dieser beiden umfänglich benachbarten Pendelkörper (3) zusammenwirkt,
wobei jede Reibschlussverbindung (30) in einem Fenster (19) zwischen den beiden in diesem Fenster (19) vorhandenen Wälzkörpern (11) angeordnet ist.

9. Vorrichtung nach einem der Ansprüche 1 bis 8, wobei der Träger (2) einzig ist und jeder Pendelkörper (3) umfasst:
- eine erste und eine zweite Pendelmasse (5), die axial voneinander beabstandet sind, wobei die erste Pendelmasse (5) axial auf einer ersten Seite (4) des Trägers (2) angeordnet ist und die zweite Pendelmasse (5) axial auf einer zweiten Seite (4) des Trägers (2) angeordnet ist, und
- mindestens ein Organ zur Verbindung (6) der ersten und der zweiten Pendelmasse (5), das die Massen zu einem Paar verbindet.

10. Vorrichtung nach Anspruch 9, wobei jeder Pendelkörper (3) zwei Verbindungsorgane (6) umfasst, welche die erste (5) und die zweite (5) Pendelmasse zu einem Paar verbinden, wobei jedes Verbindungsorgan (6) eine zweite Wälzbahn (13) definiert, die jeweils mit dem einem der beiden Wälzkörper (11) zusammenwirkt, welche die Bewegung dieses Pendelkörpers (3) in Bezug auf den Träger (2) führen.

11. Vorrichtung nach Anspruch 9, wobei jeder Wälzkörper (11) mit zwei zweiten Wälzbahnen (13) zusammenwirkt, die fest mit dem Pendelkörper (3) verbunden sind, wobei die eine dieser zweiten Wälzbahnen (13) durch die erste Pendelmasse (5) definiert wird und die andere dieser zweiten Wälzbahnen (13) durch die zweite Pendelmasse (5) definiert wird.

12. Vorrichtung nach Anspruch 10 oder 11, wobei jede Reibschlussverbindungen (30) nach einem der Ansprüche 3 bis 5 ausgestaltet ist und umfasst:
- eine erste Lasche (32), die auf der ersten Seite (4) des Trägers angeordnet ist, wobei die erste Lasche (32) fest mit einer ersten Pendelmasse (5) eines der beiden Pendelkörper (3) verbunden ist und gegen die erste Pendelmasse (5) des anderen der beiden Pendelkörper (3) reibt, und
- eine zweite Lasche (32), die auf der zweiten Seite (4) des Trägers (2) angeordnet ist, wobei die zweite Lasche (32) fest mit einer zweiten Pendelmasse (5) eines der Pendelkörper (5) verbunden ist und gegen die zweite Pendelmasse (5) des anderen der beiden Pendelkörper (3) reibt.

13. Vorrichtung nach einem der Ansprüche 1 bis 8, umfassend zwei verschiedene axial versetzte und fest verbundene Träger (2), wobei jeder Pendelkörper (3) mindestens eine Pendelmasse (5) umfasst, die axial zwischen den beiden Träger (2) angeordnet ist.

14. Vorrichtung nach einem der vorhergehenden Ansprüche, die so ausgestaltet ist, dass die Bewegung der Pendelkörper (3) es ermöglicht, die Erregungsordnung eines Verbrennungsmotors eines Zweizylinderfahrzeugs zu filtern.

15. Komponente für ein Getriebesystem eines Kraftfahrzeugs, umfassend eine Vorrichtung zur Dämpfung von Torsionsschwingungen (1) nach einem der Ansprüche 1 bis 14, wobei die Komponente insbesondere ein Zweimassenschwungrad, ein hydrodynamischer Drehmomentwandler, eine Reibungskupplungsscheibe, ein mit der Kurbelwelle fest verbundenes Schwungrad, eine trockenlaufende oder nasslaufende Doppelkupplung, eine nasslaufende Einfachkupplung oder eine Komponente eines Hybridantriebs ist.

## Claims

1. A device for damping torsional oscillations (1), comprising:
- at least one support (2) capable of being displaced rotationally about an axis (X),
- a plurality of pendulum bodies (3), each pendulum body (3) being mobile in relation to the support (2), and
- a friction-based connection (30) between two circumferentially adjacent pendulum bodies (3), **characterized in that** the friction-based connection (30) implementing a friction between axially facing friction surfaces.

2. The device as claimed in claim 1, comprising a plurality of friction-based connections (30), such that, for each pendulum body (3):
- there is a friction-based connection (30) with the pendulum body that is circumferentially adjacent in the counter-clockwise direction, and
- there is a friction-based connection (30) with the pendulum body that is circumferentially adjacent in the clockwise direction.

3. The device as claimed in claim 2, the friction-based connection (30) being produced using at least one tab (32) integral to one of the two circumferentially adjacent pendulum bodies (3) and rubbing against the other of these two pendulum bodies (3).

4. The device as claimed in claim 3, the tab (32) having a fixing part (33) on one of the two pendulum bodies (3) and a free end (34) rubbing against the other of the two pendulum bodies (3), the part (38) of this tab (32) positioned between the fixing part (33) and the free end (34) of the tab (32) being in particular undulated.

5. The device as claimed in claim 4, the tab (32) being such that its free end (34) is permanently axially facing the pendulum body (3) to which it is not integral, such that this free end (34) can rub against this pendulum body (3).

6. The device as claimed in claim 1 or 2, the friction-based connection (30) being produced via a piece (40) extending all around the axis of rotation (X) of the support (2) and mobile in relation to the support (2), this piece (40) rubbing against each pendulum body (3).

7. The device as claimed in any one of the preceding claims, comprising a plurality of rolling members (11), each rolling member (11) cooperating with a first rolling track (12) integral to the support (2) and with a second rolling track (13) integral to a pendulum body (3), the displacement of each pendulum body (3) in relation to the support (2) being guided by at least two of these rolling members (11).

8. The device as claimed in claim 7, the support (2) comprising a plurality of windows (19) in each of which two rolling members (11) are received, one of these rolling members (11) cooperating with a second rolling track (13) integral to one of the two circumferentially adjacent pendulum bodies (3) and the other of these rolling members (11) cooperating with a second rolling track (13) integral to another of these two circumferentially adjacent pendulum bodies (3), each friction-based connection (30) being positioned in a window (19) between the two rolling members (11) present in this window (19).

9. The device as claimed in any one of claims 1 to 8, the support (2) being singular and each pendulum body (3) comprising:
- a first and a second pendulum masses (5) axially spaced apart from one another, the first pendulum masse (5) being positioned axially on a first side (4) of the support (2) and the second pendulum masse (5) being positioned axially on a second side (4) of the support (2), and
- at least one link member (6) of the first and of the second pendulum masses (5), pairing said masses.

10. The device as claimed in claim 9, each pendulum body (3) comprising two link members (6) pairing the first (5) and the second (5) pendulum masses, each link member (6) defining a second rolling track (13) cooperating respectively with one of the two rolling members (11) guiding the displacement of this pendulum body (3) in relation to the support (2).

11. The device as claimed in claim 9, each rolling member (11) cooperating with two second rolling tracks (13) integral to the pendulum body (3), one of these second rolling tracks (13) being defined by the first pendulum masse (5) and the other of these second rolling tracks (13) being defined by the second pendulum masse (5).

12. The device as claimed in claim 10 or 11, each friction-based connection (30) being as claimed in any one of claims 3 to 5 and comprising:
- a first tab (32) positioned on the first side (4) of the support, the first tab (32) being integral to a first pendulum masse (5) of one of the two pendulum bodies (3) and rubbing against the first pendulum masse (5) of the other of the two pendulum bodies (3), and
- a second tab (32) positioned on the second side (4) of the support (2), the second tab (32) being integral to a second pendulum masse (5) of one of the pendulum bodies (5) and rubbing against the second pendulum masse (5) of the other of the two pendulum bodies (3).

13. The device as claimed in any one of claims 1 to 8, comprising two distinct axially offset and integral supports (2), each pendulum body (3) comprising at least one pendulum masse (5) positioned axially between the two supports (2).

14. The device as claimed in any one of the preceding claims, being configured such that the displacement of the pendulum bodies (3) makes it possible to filter the order of excitation of a two-cylinder vehicle heat engine.

15. A component for a transmission of a motor vehicle system, comprising a device for damping torsional oscillations (1) as claimed in any one of claims 1 to 14,
the component being in particular a dual mass flywheel, a hydrodynamic torque converter, a friction clutch disk, a crankshaft-integral flywheel, a dry or wet double clutch, a wet single clutch, or a component of a hybrid power train.
